# EUROPÄISCHE PATENTSCHRIFT

(11) **EP 1 115 770 B1**
(45) Veröffentlichungstag und Bekanntmachung des Hinweises auf die Patenterteilung: **10.11.2004**
(21) Anmeldenummer: 99932808.1
(22) Anmeldetag: 03.07.1999
(51) Int. Cl.: C08G 18/32, C08G 18/83, C09J 175/00

(54) **KLEBSTOFFSYSTEM ZUR BILDUNG REVERSIBLER KLEBEVERBINDUNGEN**
ADHESIVE SYSTEM TO FORM REVERSIBLE GLUED JOINTS
SYSTEME ADHESIF SERVANT A FORMER DES ASSEMBLAGES COLLES REVERSIBLES

(30) Priorität: 21.07.1998 DE 19832629
(43) Veröffentlichungstag der Anmeldung: 18.07.2001
(73) Patentinhaber: DaimlerChrysler AG, 70567 Stuttgart (DE); Fraunhofer-Gesellschaft zur Förderung der angewandten Forschung e.V., 80686 München (DE); Henkel Teroson GmbH, 69123 Heidelberg (DE)
(72) Erfinder: BECHER, Peter, D-71120 Grafenau (DE); FLEGEL, Heinrich, D-71134 Aidlingen (DE); HERRMANN, Michael, D-75242 Neuhausen (DE); KURZMANN, Peter, D-71116 Gärtringen (DE); BAUER, Jörg, D-15754 Senzig (DE); BAUER, Monika, D-15754 Senzig (DE); KRÜGER, Hartmut, D-12489 Berlin (DE); NEUMANN-RODEKRICH, Jens, D-12069 Berlin (DE); SCHNEIDER, Jürgen, D-14513 Teltow (DE); HIRTHAMMER, Michael, D-69251 Gailberg (DE)
(86) Internationale Anmeldenummer: PCT/EP1999/004640
(87) Internationale Veröffentlichungsnummer: WO 2000/005288

(56) Entgegenhaltungen:
- DE-U- 9 216 278
- US-A- 3 871 911
- US-A- 4 882 399

## Beschreibung

Die vorliegende Erfindung betrifft ein Klebstoffsystem zur Bildung reversibler Klebeverbindungen mit mindestens einer polymeren Klebstoffkomponente auf der Basis von Polyurethanen und/oder Polyharnstoffen und/oder Epoxidharzen und mindestens einer Zusatzkomponente. Die vorliegende Erfindung betrifft ferner ein Verfahren zum reversiblen Verkleben von Gegenständen und gezielten Lösen der erhaltenen Klebeverbindung.

Auf den verschiedensten technischen Gebieten werden heute Gegenstände miteinander verklebt. Insbesondere werden bisher übliche Schweißverbindungen durch Verklebungen ersetzt. Dazu werden hochfeste, widerstandsfähige Klebeverbindungen benötigt. Dies gilt vor allem auch bei der Herstellung von Kraftfahrzeugen. Bei dieser Bauweise ist von Nachteil, daß für eine Reparatur oder für das Recycling die einzelnen verklebten Bauteile der Kraftfahrzeuge nur schwer, zeitlich aufwendig und gewaltsam, z. Bsp. mittels Hammer und Meißel, Sägen oder Schweißen, wieder getrennt werden können.

Gattungsgemäße Klebstoffsysteme sind z. Bsp. aus der US 45 99 273 bekannt. Diese Druckschrift betrifft oberflächenaktive Stoffe, deren oberflächenaktive Wirkung durch Zusatzkomponenten in Form von photolabilen Schutzgruppen blockiert ist. Durch die Einwirkung von Strahlung werden die Schutzgruppen entfernt, und die oberflächenaktive Wirkung wird wieder hergestellt. Bei derartigen oberflächenaktiven Stoffen kann es sich auch um reversibel aufbringbare Beschichtungen handeln. Hochfeste Klebeverbindungen sind damit aber nicht realisierbar.

Aus der DE 92 16 278 U1 sind Haftklebstoffe bekannt, mit denen Bauteile von Kraftfahrzeugen miteinander reversibel verbunden werden können. Auch damit sind keine hochfesten Klebeverbindungen realisierbar.

Aufgabe der vorliegenden Erfindung ist es daher, Klebstoffsysteme der oben genannten Art bereitzustellen, mit welchen hochfeste Klebeverbindungen herstellbar sind, welche auf einfache Weise eine gezielte mechanische Trennung der miteinander verklebten Gegenstände ermöglichen.

Die Lösung besteht darin, daß die mindestens eine Zusatzkomponente mindestens eine funktionelle Gruppe aufweist, welche durch Energieeintrag aktivierbar ist, derart, daß eine chemische Reaktion mit der Klebstoffkomponente unter zumindest teilweisem Abbau der Klebstoffkomponente erfolgt.

Das erfindungsgemäße Verfahren zeichnet sich durch folgende Verfahrensschritte aus:
- Herstellen einer Klebeverbindung unter Verwendung eines erfindungsgemäßen Klebstoffsystems,
- Desaktivieren der Klebeverbindung durch Energieeintrag,
- Trennen der Gegenstände voneinander.

Das erfindungsgemäße Klebstoffsystem bzw. das erfindungsgemäße Verfahren ermöglicht also die Herstellung hochfester Klebeverbindungen mittels grundsätzlich bekannter Hochleistungsklebstoffe auf der Basis von Polyurethanen, Polyharnstoffen bzw. Epoxidharzen, welche durch Energiezufuhr gezielt geschwächt und somit wieder gelöst werden können. Dabei werden die Molmasse und/oder die Vernetzungsdichte des Klebstoff-Basispolymers, also der Klebstoffkomponente, stark verändert. Dies führt zum Verlust der mechanischen Festigkeit des Klebstoffs. Die miteinander verklebten Gegenstände können somit jederzeit leicht auf einfache Weise mechanisch voneinander getrennt werden. Dies bedeutet eine erhebliche Zeit- und Kostenersparnis.

Vorteilhafte Weiterbildungen ergeben sich aus den Unteransprüchen. Die Zusatzkomponente kann dem erfindungsgemäßen Klebstoffsystems nach Art eines Additivs einfach beigemischt sein.

Die Zusatzkomponente kann durch Eintrag von Wärmeenergie, z. Bsp. Wärmeleitung, Konvektion bzw. IR-Strahlung, oder durch Eintrag von Strahlungsenergie geeigneter Wellenlänge, insbesondere Mikrowellen, aktivierbar sein.

Es können auch Zusatzkomponenten verwendet werden, welche mit der Klebstoffkomponente ohne weitere Aktivierung spontan reagieren. In diesem Fall sollten die Zusatzkomponenten blockiert, d.h. in ihrer Reaktivität herabgesetzt sein. Dies kann durch Anbindung von Schutzgruppen, durch Verkapselung bzw. Mikroverkapselung oder durch Komplexierung mit einem anorganischen Komplexbildner realisiert werden. Die Blockierung ist dann vorzugsweise ebenfalls durch Eintrag von Wärmeenergie, z. Bsp. Wärmeleitung bzw. Konvektion und/oder durch Eintrag von Strahlungsenergie, insbesondere Mikrowellen bzw. IR-Strahlung, aktivierbar.

Geeignete Zusatzkomponenten sind z. Bsp. organische Amine oder organische Säuren. Organische Basen bewirken eine basenkatalysierte Spaltung des Epoxid-Rückgrats bzw. der Urethan- bzw. Harnstoffbindungen im Polymerrückgrat der entsprechenden Polymere. Das Epoxidrückgrat kann auch durch organische Säuren gespalten werden.

Die organischen Amine und Säuren werden in ihrer Reaktivität blockiert, indem sie mit Schutzgruppen versehen oder in Kapseln oder Mikrokapseln, insbesondere aus Aminoharz eingeschlossen werden. Amine können auch in einem Metallhalogenidkomplex komplexiert werden, vorzugsweise mit Lithiumbromid oder Natriumchlorid. Diese Methoden zur Deaktivierung sind z. Bsp. aus der organischen Synthesechemie oder bei Depotwirkstoffen prinzipiell bekannt.

Eine weitere bevorzugte Ausführungsform der vorliegenden Erfindung besteht darin, daß die Klebstoffkomponente chemisch modifiziert ist. Die chemische Modifizierung besteht darin, daß eine oder mehrere Strukturkomponenten chemisch an die Klebstoffkomponente gebunden, vorzugsweise einpolymerisiert sind. Die Strukturkkomponenten sind so gewählt, daß sie mit der Zusatzkomponente reagieren, so daß sie abgebaut werden. Dadurch wird auch die Klebstoffkomponente geschwächt bzw. völlig zerstört.

Bevorzugte Strukturkomponenten sind Triazinderivate. Werden Triazine in die Klebstoffkomponente einpolymerisiert, entstehen Cyanurat-Reste im Polymerrückgrat. Der Triazinring bewirkt bei einer Reaktion mit einem Amin die Zersetzung der Cyanurat-Reste über eine Aminolyse. Damit zerfällt auch die Klebstoffkomponente.

Die erfindungsgemäßen Klebesysteme können zur Verklebung von Gegenständen aus Metall, Kunststoffen, Glas oder Textilien, jeweils für sich oder untereinander, verwendet werden. Sie sind besonders geeignet zur Herstellung von Serienklebstoffen, die insbesondere im Automobilbau Anwendung finden.

Im folgenden wird die vorliegende Erfindung anhand von Ausführungsbeispielen näher erläutert.

### I. Beispiel 1 (Vergleichsbeispiel):

Es wurden S2-Prüfstäbe (DIN 53455) mit den Abmessungen 140 cm × 10 cm × 3 cm hergestellt. Sie wurden aus einem feuchtehärtenden PUR-Klebstoff auf der Basis von Diphenylmethandiisocyanat und Polyetherpolyol gegossen und 10 Tage gehärtet. Die Zugfestigkeit wurde bei 23°C und 50 % rel. Feuchte geprüft. Die Zugfestigkeit betrug 8 MPa.

### II. Beispiel 2

Es wurde wie unter I. verfahren, wobei dem Polyurethanklebstoff vor dem Gießen 3 Ma-% eines Lithiumbromid/Triaminoethylamin-Komplexes zugefügt wurden. Die Zugfestigkeit der so gefertigten Prüfstäbe betrug 8 MPa.

### III. Beispiel 3

Es wurde wie unter I. verfahren, wobei dem Polyurethanklebstoff vor dem Gießen 4 Ma-% Aminoharz-verkapseltes Octylamin zugefügt wurden. Die Zugfestigkeit der so gefertigten Prüfstäbe betrug 7 MPa.

### IV. Beispiel 4

Es wurde wie unter I. verfahren, wobei dem Polyurethanklebstoff vor dem Gießen 3 Ma-% eines Natriumchlorid/4,4'-Diaminodiphenyl-methan-Komplexes zugefügt wurden. Die Zugfestigkeit der so gefertigten Prüfstäbe betrug 7 MPa.

### V. Deaktivierung der Klebeverbindung

Die gemäß den Beispielen 2, 3 und 4 gefertigten Prüfstäbe wurden 30 min. auf 175°C erhitzt. Danach wiesen sie folgende Zugfestigkeiten auf:
- Beispiel 2:: 0,52 MPa
- Beispiel 3:: 1,02 MPa
- Beispiel 4:: 0,42 MPa

### VI. Beispiel 5 (Vergleichsbeispiel)

Es wurde wie unter I. verfahren, wobei ein Prepolymer zum Einsatz kam, in dem 22 Ma-% des Polyetherpolyols durch ein mit Diphenylmethandiisocyanat umgesetztes 2,4,6-Tris-(ω-hydroxy-polyalkoxy-)-1,3,5-triazin ersetzt wurden. Die Zugfestigkeit des reinen gehärteten Polymers (nicht als Klebstoff formuliert) betrug 1,1 MPa.

### VII. Beispiel 6

Es wurde wie unter VI. verfahren, wobei dem Polyurethanklebstoff vor dem Gießen 4 Ma-% eines Natriumchlorid/4,4'-Diaminodiphenylmethan-Komplexes zugefügt wurden. Die Zugfestigkeit der so gefertigten Prüfstäbe betrug 1,2 MPa.

### VIII. Deaktivierung der Klebeverbindung

Die gemäß den Beispielen 5 und 6 gefertigten Prüfstäbe wurden 30 min. auf 175°C erhitzt. Danach wiesen sie folgende Zugfestigkeiten auf:
- Beispiel 5 (Vergleichsbeispiel):: 1,2 MPa

- Beispiel 6:: 0,2 MPa

### IX. Beispiel 7

2 g Tris-(4-aminophenoxy)-1,3,5-triazin, gelöst in 10g Anilin, wurden bei 90°C mit 44g Bisphenol-A-diglycidether homogen vermischt und zur Herstellung von Prüfstreifen in Formen wie unter I. gegossen. Die Härtung erfolgte über 18 Stunden bei 90°C. Mittels dynamisch-mechanischer Analyse wurde die Glasübergangstemperatur des erhaltenen Materials mit Tg = 99°C bestimmt. Beim Erhitzen auf 120°C bildete sich eine klebrige Masse ohne mechanische Festigkeit.

### X. Beispiel 8

13,5 g des Reaktionsproduktes aus 150g Bisphenol-A-diglycidether mit 15g Tris-(4-aminophenoxy)-1,3,5-triazin wurden mit 2,7g Trimethyl-1,6-diaminohexan unter Zusatz von 3g N-tert.Butyloxycarbonyl-aminooctan in Formen analog IX. gegeben und bei 40°C über 20 Stunden gehärtet. Die Untersuchung mittels dynamisch-mechanischer Analyse ergab eine Glasübergangstemperatur von Tg = 80°C. Nach Erwärmen auf eine Temperatur von 200°C über mindestens 30 min erfolgte eine schnelle Erhöhung der Glasübergangstemperatur. Das Material versprödete so stark, daß es bereits durch die geringen Beanspruchungen im DMA-Meßgerät brach.

## Patentansprüche

1. Klebstoffsystem zur Bildung reversibler Klebeverbindungen mit mindestens einer polymeren Klebstoffkomponente auf der Basis von Polyurethanen und/oder Polyharnstoffen und/oder Epoxidharzen und mindestens einer Zusatzkomponente,
**dadurch gekennzeichnet**,
daß-die mindestens eine Zusatzkomponente mindestens eine funktionelle Gruppe aufweist, welche durch Energieeintrag aktivierbar ist, derart, daß eine chemische Reaktion mit der Klebstoffkomponente unter zumindest teilweisem Abbau der Klebstoffkomponente erfolgt.

2. Klebstoffsystem nach Anspruch 1,
**dadurch gekennzeichnet,**
**daß** die Zusatzkomponente der Klebstoffkomponente beigemischt ist.

3. Klebstoffsystem nach einem der vorhergehenden Ansprüche,
**dadurch gekennzeichnet,**
**daß** die Zusatzkomponente durch Wärmeenergie und/oder durch Strahlungsenergie aktivierbar ist.

4. Klebstoffsystem nach einem der vorhergehenden Ansprüche,
**dadurch gekennzeichnet,**
**daß** die Zusatzkomponente durch mindestens eine Schutzgruppe und/oder durch Verkapselung und/oder durch Komplexierung mit einem anorganischen Komplexbildner in ihrer Reaktivität blockiert ist und die Blockierung durch Energieeintrag aufhebbar ist.

5. Klebstoffsystem nach Anspruch 4,
**dadurch gekennzeichnet,**
**daß** die Blockierung durch Wärmeenergie und/oder durch Strahlungsenergie aufhebbar ist.

6. Klebstoffsystem nach einem der vorhergehenden Ansprüche,
**dadurch gekennzeichnet,**
**daß** es als Zusatzkomponente ein oder mehrere organische Amine aufweist.

7. Klebstoffsystem nach einem der Ansprüche 1 bis 5,
**dadurch gekennzeichnet,**
**daß** es eine Klebstoffkomponente auf der Basis von Epoxidharzen und als Zusatzkomponente ein oder mehrere organische Säuren aufweist.

8. Klebstoffsystem nach Anspruch 6 oder 7,
**dadurch gekennzeichnet,**
**daß** das Amin bzw. die Säure in Kapseln oder Mikrokapseln, vorzugsweise aus Aminoharz, eingeschlossen sind.

9. Klebstoffsystem nach Anspruch 6 oder 7,
**dadurch gekennzeichnet ,**
**daß** das Amin in einen Metallhalogenid-Komplex, insbesondere mit Lithiumbromid und/oder Natriumchlorid, eingebunden ist.

10. Klebstoffsystem nach einem der vorhergehenden Ansprüche,
**dadurch gekennzeichnet,**
**daß** die Klebstoffkomponente mittels mindestens einer chemisch an die Klebstoffkomponente gebundenen Strukturkomponente modifiziert ist, wobei die Strukturkomponente so ausgewählt ist, daß durch die Aktivierung der Zusatzkomponente eine chemische Reaktion mit der Strukturkomponente unter zumindest teilweisem Abbau der Klebstoffkomponente erfolgt.

11. Klebstoffsystem nach Anspruch 10,
**dadurch gekennzeichnet,**
**daß** die mindestens eine Strukturkomponente in die Klebstoffkomponente einpolymerisiert ist.

12. Klebstoffsystem nach Anspruch 10 oder 11,
**dadurch gekennzeichnet,**
**daß** die mindestens eine Strukturkomponente mindestens ein Triazinderivat ist.

13. Verfahren zum reversiblen Verkleben von Gegenständen und gezielten Lösen der Klebeverbindungen zwischen diesen Gegenständen,
**gekennzeichnet durch**
folgende Verfahrensschritte:
- Herstellen einer Klebeverbindung unter Verwendung eines Klebstoffsystems nach einem der Ansprüche 1 bis 13,
- Desaktivieren der Klebeverbindung **durch** Energieeintrag,
- Trennen der Gegenstände voneinander.

14. Verfahren nach Anspruch 13,
**dadurch gekennzeichnet,**
**daß** der Energieeintrag durch Wärmezufuhr, insbesondere mittels Wärmeleitung bzw. Konvektion und/oder elektromagnetische Strahlung, insbesondere Infrarotstrahlung bzw. Mikrowellen, erfolgt.

15. Verfahren nach einem der Ansprüche 13 bis 14,
**dadurch gekennzeichnet,**
**daß** Gegenstände aus Metall, Kunststoffen, Glas oder Textilien jeweils für sich oder untereinander verklebt werden.

16. Verwendung des Klebstoffsystems nach einem der Ansprüche 1 bis 12 bzw. des Verfahrens nach einem der Ansprüche 13 bis 15 zur Verklebung von Bauteilkomponenten in Kraftfahrzeugen.

17. Verwendung des Klebstoffsystems nach einem der Ansprüche 1 bis 12 zur Herstellung von Serienklebstoffen.

## Claims

1. Adhesive system for forming reversible adhesive bonds, comprising at least one polymeric adhesive component based on polyurethanes and/or polyureas and/or epoxy resins and at least one additional component, **characterized in that** the at least one additional component comprises at least one functional group which can be activated by introduction of energy, in such a way that a chemical reaction with the adhesive component takes place, involving at least partial breakdown of the adhesive component.

2. Adhesive system according to Claim 1, **characterized in that** the additional component is admixed to the adhesive component.

3. Adhesive system according to one of the preceding claims, **characterized in that** the additional component is activatable by thermal energy and/or by radiative energy.

4. Adhesive system according to one of the preceding claims, **characterized in that** the additional component is blocked in its reactivity by at least one protective group and/or by encapsulation and/or by complexing with an inorganic complexing agent and the blocking can be eliminated by introduction of energy.

5. Adhesive system according to Claim 4, **characterized in that** the blocking can be eliminated by thermal energy and/or by radiative energy.

6. Adhesive system according to one of the preceding claims, **characterized in that** it comprises as additional component one or more organic amines.

7. Adhesive system according to one of Claims 1 to 5, **characterized in that** it comprises an adhesive component based on epoxy resins and, as additional component, one or more organic acids.

8. Adhesive system according to Claim 6 or 7, **characterized in that** the amine and/or the acid are enclosed in capsules or microcapsules, preferably made of amino resin.

9. Adhesive system according to Claim 6 or 7, **characterized in that** the amine is incorporated in a metal halide complex, especially with lithium bromide and/or sodium chloride.

10. Adhesive system according to one of the preceding claims, **characterized in that** the adhesive component has been modified by means of at least one structural component attached chemically to the adhesive component, the structural component being selected so that, as a result of the activation of the additional component, a chemical reaction takes place with the structural component, involving at least partial breakdown of the adhesive component.

11. Adhesive system according to Claim 10, **characterized in that** the at least one structural component is incorporated by copolymerization into the adhesive component.

12. Adhesive system according to Claim 10 or 11, **characterized in that** the at least one structural component is at least one triazine derivative.

13. Process for the reversible bonding of articles and controlled parting of the adhesive bonds between these articles, **characterized by** the following steps:
- preparation of an adhesive bond using an adhesive system according to one of Claims 1 to 13,
- deactivation of the adhesive bond by introduction of energy,
- separation of the articles from one another.

14. Process according to Claim 13, **characterized in that** the energy is introduced by heat supply, especially by means of thermal conduction or convection, and/or electromagnetic radiation, especially infrared radiation or microwaves.

15. Process according to one of Claims 13 and 14, **characterized in that** articles of metal, plastics, glass or textiles are bonded, in each case individually or with one another.

16. Use of the adhesive system according to one of Claims 1 to 12 or of the process according to one of Claims 13 to 15 for bonding components in motor vehicles.

17. Use of the adhesive system according to one of Claims 1 to 12 for producing production line adhesives.

## Revendications

1. Système adhésif destiné à la réalisation de collages réversibles, comprenant au moins un composant adhésif polymère à base de polyuréthannes et/ou de polyurées et/ou de résines époxydes et au moins un composant supplémentaire, **caractérisé en ce que** ledit au moins un composant supplémentaire présente au moins un groupe fonctionnel qui peut être activé par introduction d'énergie de telle manière qu'il se produit une réaction chimique avec le composant adhésif, avec une dégradation au moins partielle du composant adhésif.

2. Système adhésif selon la revendication 1, **caractérisé en ce que** le composant supplémentaire est mélangé au composant adhésif.

3. Système adhésif selon l'une quelconque des revendications précédentes, **caractérisé en ce que** le composant supplémentaire est activable par énergie thermique et/ou par énergie par rayonnement.

4. Système adhésif selon l'une quelconque des revendications précédentes, **caractérisé en ce que** le composant supplémentaire a sa réactivité bloquée par au moins un groupe de protection et/ou par encapsulage et/ou par complexation avec un complexant inorganique et le blocage peut être éliminé par introduction d'énergie.

5. Système adhésif selon la revendication 4, **caractérisé en ce que** le blocage peut être éliminé par énergie thermique et/ou par énergie par rayonnement.

6. Système adhésif selon l'une quelconque des revendications précédentes, **caractérisé en ce qu'**il présente une ou plusieurs amines organiques comme composant supplémentaire.

7. Système adhésif selon l'une quelconque des revendications 1 à 5, **caractérisé en ce qu'**il présente un composant adhésif à base de résines époxydes et comme composant supplémentaire un ou plusieurs acides organiques.

8. Système adhésif selon la revendication 6 ou 7, **caractérisé en ce que** l'amine ou l'acide est enfermé dans des capsules ou des microcapsules, de préférence en résine amino.

9. Système adhésif selon la revendication 6 ou 7, **caractérisé en ce que** l'amine est liée dans un complexe d'halogénure de métal, en particulier avec du bromure de lithium et/ou du chlorure de sodium.

10. Système adhésif selon l'une quelconque des revendications précédentes, **caractérisé en ce que** le composant adhésif est modifié au moyen d'au moins un composant de structure lié chimiquement au composant adhésif, le composant de structure étant choisi de telle manière que l'activation du composant supplémentaire provoque une réaction chimique avec le composant de structure, avec une dégradation au moins partielle du composant adhésif.

11. Système adhésif selon la revendication 10, **caractérisé en ce que** ledit au moins un composant de structure est copolymérisé dans le composant adhésif.

12. Système adhésif selon la revendication 10 ou 11, **caractérisé en ce que** ledit au moins un composant de structure est au moins un dérivé triazinique.

13. Procédé pour le collage réversible d'objets et le détachement ciblé des collages entre ces objets, **caractérisé par** les étapes de procédé suivantes :
- préparation d'un collage en utilisant un système adhésif selon l'une quelconque des revendications 1 à 13,
- désactivation du collage par introduction d'énergie,
- séparation des objets les uns des autres.

14. Procédé selon la revendication 13, **caractérisé en ce que** l'introduction d'énergie est réalisée par apport thermique, en particulier par conduction thermique ou par convexion et/ou rayonnement électromagnétique, en particulier un rayonnement infrarouge ou des micro-ondes.

15. Procédé selon l'une quelconque des revendications 13 à 14, **caractérisé en ce qu'**on colle ensemble ou les uns avec les autres des objets en métal, matériau synthétique, verre ou textile.

16. Utilisation du système adhésif selon l'une quelconque des revendications 1 à 12 ou du procédé selon l'une quelconque des revendications 13 à 15 pour coller des pièces de construction dans des véhicules.

17. Utilisation du système adhésif selon l'une quelconque des revendications 1 à 12 pour la réalisation d'adhésifs en série.
